# EUROPEAN PATENT APPLICATION

(11) **EP 4 303 959 A1**
(43) Date of publication of application: **10.01.2024**
(21) Application number: 22881405.9
(22) Date of filing: 14.10.2022
(51) Int. Cl.: H01M 4/36, H01M 4/525, H01M 4/505, H01M 4/62, H01M 10/052, C01G 53/00, H01M 4/02

(54) **CATHODE ACTIVE MATERIAL FOR LITHIUM SECONDARY BATTERY AND METHOD FOR MANUFACTURING SAME**

(30) Priority: 15.10.2021 KR 20210137697
(71) Applicant: LG Chem, Ltd., Seoul 07336 (KR)
(72) Inventor: DO, Joong Yeop, Daejeon 34122 (KR); SHIN, Sun Sik, Daejeon 34122 (KR); SHIN, Ho Suk, Daejeon 34122 (KR)
(74) Representative: Hoffmann Eitle
(86) International application number: PCT/KR2022/015604
(87) International publication number: WO 2023/063778

(57) **Abstract**

The present invention relates to a positive electrode active material for a lithium secondary battery and a method of preparing the positive electrode active material.

## Description

### TECHNICAL FIELD

### Cross-reference to Related Applications

This application claims the benefit of priority based on Korean Patent Application No. 10-2021-0137697, filed on October 15, 2021, in the Korean Intellectual Property Office, the disclosure of which is incorporated herein in its entirety by reference.

### Technical Field

The present invention relates to a positive electrode active material for a lithium secondary battery and a method of preparing the positive electrode active material.

### BACKGROUND ART

Demand for secondary batteries as an energy source has been rapidly increased as technology development and demand with respect to mobile devices have increased. Among such secondary batteries, lithium secondary batteries having high energy density and voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as LiCoO₂, having a high working voltage and excellent capacity characteristics has been mainly used. However, LiCoO₂ has fairly poor thermal properties due to an unstable crystal structure caused by delithiation. In addition, since LiCoO₂ is expensive, there is a limitation in using a large amount of LiCoO₂ as a power source for applications such as electric vehicles.

Lithium manganese composite metal oxides (LiMnO₂ or LiMn₂O₄), lithium iron phosphate compounds (LiFePO₄, and the like), or lithium nickel composite metal oxides (LiNiO₂, and the like.) have been developed as materials for replacing LiCoO₂. Among these materials, research and development of the lithium nickel composite metal oxides, in which a large capacity battery may be easily achieved due to a high reversible capacity of about 200 mAh/g, have been more actively conducted. However, LiNiO₂ has limitations in that LiNiO₂ has poorer thermal stability than LiCoO₂ and, when an internal short circuit takes place in a charged state due to an external pressure, the positive electrode active material itself is decomposed to cause rupture and ignition of batteries. Accordingly, as a method to improve low thermal stability while maintaining the excellent reversible capacity of LiNiO₂, a lithium transition metal oxide, in which a portion of nickel (Ni) is substituted with cobalt (Co), manganese (Mn), or aluminum (Al), has been developed.

However, with respect to the lithium transition metal oxide, in a case in which an amount of nickel is increased in order to increase capacity characteristics, there has been a limitation in that the thermal stability is further reduced and a large amount of lithium by-product, such as LiOH or Li₂CO₃, is formed on a surface of the lithium transition metal oxide due to the tendency of the nickel in the lithium transition metal oxide to remain as Ni²⁺. As described above, in a case in which the lithium transition metal oxide having a large amount of lithium by-product on the surface thereof is used as a positive electrode active material, the lithium by-product reacts with an electrolyte injected into the lithium secondary battery to cause gas generation and swelling of the battery, and accordingly, battery lifetime, stability, and battery resistance characteristics may be degraded.

Thus, there is a need to develop a positive electrode active material exhibiting high capacity due to increased particle strength and structural stability to allow for production of a secondary battery having improved resistance and cycle performance.

### [Related Art Document]

### [Patent Document]

(Patent Document 1) Korean Patent Publication No. 10-2014-0093529

### DISCLOSURE OF THE INVENTION

### TECHNICAL PROBLEM

An aspect of the present invention provides a positive electrode active material having improved surface properties to suppress formation of a rock-salt structure and having improved resistance and cycle performance.

### TECHNICAL SOLUTION

According to an aspect of the present invention, there is provided a positive electrode active material including a lithium transition metal oxide containing nickel in an amount of 60 mol% or greater with respect to a total number of moles of transition metals excluding lithium, and a coating layer placed on a surface of the lithium transition metal oxide and containing a metal oxide, wherein the lithium transition metal oxide is a single particle including primary particles having an average particle diameter (D₅₀) of 0.7 to 3 um, and the metal oxide is primary particles having an average particle diameter (D₅₀) of 0.5 um or less and includes at least one metal element selected from the group consisting of Ni, Co, Mn, Al, B, Ti, Ta, W, and Nb.

In addition, according to another aspect of the present invention, there is provided a method of preparing a positive electrode active material, which includes preparing a transition metal hydroxide comprising nickel in an amount of 60 mol% or greater with respect to a total number of moles of transition metals (S1), mixing the transition metal hydroxide with a lithium raw material and firing the mixture at a temperature of 800 to 890 °C to prepare a single particle lithium transition metal oxide (S2), heat treating the lithium transition metal oxide at a temperature higher than the firing temperature by 30 to 50 °C (S3), and mixing the heat treated lithium transition metal oxide with a coating raw material comprising at least one metal element selected from the group consisting of Ni, Co, Mn, Al, B, Ti, Ta, W, and Nb, and heat treating the mixture (S4).

### ADVANTAGEOUS EFFECTS

When over-firing is performed upon preparing a positive electrode active material through a preparation method of the present invention, a positive electrode active material in the form of a single particle may be prepared, and also, the size and composition of primary particles placed in a coating layer of the positive electrode active material may be controlled.

A positive electrode active material according to the present invention has excellent stability in batteries, and may thus improve battery performance such as capacity retention and lifespan.

### BRIEF DESCRIPTION OF THE DRAWINGS

FIG. 1 is an SEM image showing a positive electrode active material of Example 1;
FIG. 2 is an SEM image showing a positive electrode active material of Comparative Example 1; and
FIG. 3 is an SEM image showing a positive electrode active material of Comparative Example 2.

### MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

### <Positive electrode active material>

A positive electrode active material of the present invention includes a lithium transition metal oxide containing nickel in an amount of 60 mol% or greater with respect to a total number of moles of transition metals excluding lithium, and a coating layer placed on a surface of the lithium transition metal oxide and containing a metal oxide, the lithium transition metal oxide is a single particle including primary particles having an average particle diameter (D₅₀) of 0.7 to 3 um, and the metal oxide is primary particles having an average particle diameter (D₅₀) of 0.5 um or less and includes at least one metal element selected from the group consisting of Ni, Co, Mn, Al, B, Ti, Ta, W, and Nb.

The lithium transition metal oxide is a high-Ni NCM-based lithium transition metal oxide, which includes nickel (Ni), cobalt (Co), and manganese (Mn), and includes nickel (Ni) in an amount of 60 mol% or more with respect to a total number of moles of transition metals excluding lithium (Li). The amount of nickel may be 70 mol% or more, or 80 mol% or more, with respect to a total number of moles of transition metals excluding lithium (Li). As described above, as the amount of nickel (Ni) satisfies 60 mol% or more with respect to a total number of moles of transition metals excluding lithium (Li), high capacity may be achieved and excellent stability may also be secured.

However, when a molar fraction of Ni²⁺ with respect to the amount of nickel is excessively high, an amount of mixed cations increases, thereby forming a rock salt structure with no electrochemical reactivity in part, which may disturb charging and discharging and accordingly reduce discharge capacity. In addition, once formed, the rock salt structure keep diffusing within particles to further deteriorate performance.

Therefore, in the present invention, as will be described later, primary particles having a small particle size are placed on a coating layer placed on a surface of a lithium transition metal oxide to suppress the diffusion of the rock salt structure. In addition, a metal oxide containing at least one metal element selected from the group consisting of Ni, Co, Mn, Al, B, Ti, Ta, W, and Nb as the primary particles placed in the coating layer is used to lower the amount of nickel on the surface, relative to lithium transition metal oxide, thereby effectively preventing the rock salt structure from being formed.

The lithium transition metal oxide may be represented by Formula 1 below.

[Formula 1] Li₁₊ₐNiₓCO_{y}Mn_{z}M¹_{w}O₂

In Formula 1 above,
M¹ is at least one selected from the group consisting of Al, Mg, V, Ti, and Zr, and
0≤a≤0.5, 0.6≤x<1, 0<y≤0.4, 0<z≤0.4, 0<w≤0.04, and x+y+z+w=1 are satisfied.

In Formula 1, 1+a represents a molar ratio of lithium in the lithium transition metal oxide represented by Formula 1, where a may satisfy 0≤a≤0.5, 0≤a≤0.20, preferably 0≤a≤0.15.
x represents a molar ratio of nickel among metal components excluding lithium in the lithium transition metal oxide represented by Formula 1, where x may satisfy 0.6≤x<1.0, preferably 0.8≤x<1.0.
y represents a molar ratio of cobalt among the metal components excluding lithium in the lithium transition metal oxide represented by Formula 1, where y may satisfy 0<y≤0.4, preferably 0<y≤0.2 when considering significant improvement in capacity by including Co.
z represents a molar ratio of manganese among the metal components excluding lithium in the lithium transition metal oxide represented by Formula 1, where z may satisfy 0<z≤0.4, preferably 0<z≤0.2.
M¹ is an element substituted for a transition metal site in the lithium transition metal oxide represented by Formula 1, and may include at least one selected from the group consisting of aluminum (Al), magnesium (Mg), vanadium (V), titanium (Ti), and zirconium (Zr).
w represents a molar ratio of doping element M among the metal components excluding lithium in the lithium transition metal oxide represented by Formula 1, where w may satisfy 0<w≤0.04, preferably 0≤w≤0.02.

The lithium transition metal oxide is a single particle including primary particles having an average particle diameter (D₅₀) of 0.7 to 3 µm.

The expression "single particle" is a term used to distinguish it from positive electrode active material particles in the form of secondary particles formed by aggregation of tens to hundreds of primary particles which have been typically and generally used. and the single particle in the present application means includes an aggregate particle of 10 or less primary particles. The term "secondary particle" refers to an aggregate, that is a secondary structure, in which primary particles are aggregated through physical or chemical bonding between the primary particles without an intentional aggregation or assembly process of the primary particles constituting the secondary particle.

The expression "primary particle" refers to a smallest particle unit which is distinguished as one body when a cross section of a positive electrode active material is observed through a scanning electron microscope (SEM), wherein it may be composed of a single grain, or may also be composed of a plurality of grains. As used herein, an average particle diameter of the primary particle was determined by measuring a size of each particle distinguished from cross-sectional SEM data of positive electrode active material particles, and then calculating an arithmetic average value thereof.

The expression "average particle diameter (D₅₀)" may be defined as a particle diameter at a cumulative volume of 50% in a particle size distribution curve, and the average particle diameter (D₅₀) may be measured by using a laser diffraction method. Specifically, after target particles are dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W, and the average particle diameter (D₅₀) at the cumulative volume of 50% may then be calculated by the measurement instrument.

The primary particles forming a single particle have an average particle diameter (D₅₀) of 0.7 um to 3 um. More preferably, the primary particles may have an average particle diameter (D₅₀) of 1 um to 3 µm, and most preferably 1.5 um to 2.5 µm.

The lithium transition metal oxide included in the positive electrode active material of the present invention is formed of primary particles having an average particle diameter (D₅₀) within the above range, and may thus suppress crack formation caused by charging/discharging cycles and prevent an electrolyte from penetrating between cracks, thereby improving lifespan characteristics of batteries. Also, the placement of primary particles smaller in size than primary particles forming the lithium transition metal oxide in the coating layer of the lithium transition metal oxide minimizes performance degradation caused by diffusion of a rock salt structure.

The single particle has an average particle diameter (D₅₀) of 1 um to 10 um. The single particle may preferably have an average particle diameter (D₅₀) of 2 um to 7 um, 3 um to 6 um, or 3.5 um to 5 um. Since the lithium transition metal oxide included in the positive electrode active material is in the form of a single particle, its particle strength may be excellent even when the lithium transition metal oxide is formed to have a small particle diameter, an average particle diameter (D₅₀) of 1 µm to 10 µm.

The single particle may be formed of 2 to 30 primary particles, specifically 3 to 25 or 5 to 20 primary particles. When the number of primary particles forming a single particle is within the above range, power and resistance of batteries may be improved compared to a single particle formed of only one huge primary particle.

The positive electrode active material of the present invention includes a coating layer placed on a surface of the lithium transition metal oxide and containing a metal oxide. The coating layer is distinguished from the single particle form of the lithium transition metal oxide and may refer to a region where the metal oxide is placed on a surface thereof.

In this case, the metal oxide is primary particles having an average particle diameter (D₅₀) of 0.5 um or less and includes at least one metal element selected from the group consisting of Ni, Co, Mn, Al, B, Ti, Ta, W, and Nb.

The metal oxide may be derived from a reaction between a lithium by-product on the surface of the lithium transition metal oxide and a coating raw material including at least one metal element selected from the group consisting of Ni, Co, Mn, Al, B, Ti, Ta, W, and Nb. For example, the metal oxide may be a lithium-metal oxide formed through a reaction between a lithium by-product and a metal oxide including at least one metal element selected from the group consisting of Ni, Co, Mn, Al, B, Ti, Ta, W, and Nb.

In the present invention, the coating layer in the positive electrode active material is placed on the surface of the lithium transition metal oxide and includes a metal oxide, and the metal oxide is primary particles and has an average particle diameter (D₅₀) of 0.5 um or less, preferably 0.1 um to 0.3 µm.

Since the form of the metal oxide is primary particles having an average particle diameter (D₅₀) within the above range, in the present invention, the size of the primary particles is small to suppress rapid diffusion of a rock salt structure and minimize an increase in thickness of the rock salt structure and the resulting degradation in performance.

The fact that the metal oxide in the coating layer is primary particles does not limit position or shape of the primary particles present in the coating layer. Specifically, when the metal oxide is primary particles having the average particle diameter described above, a case where the primary particles are placed on the surface of the lithium transition metal oxide in an unaggregated state, a case where some of the primary particles are aggregated to form an aggregate, and some of which are present without being aggregated, and a case where all primary particles form an aggregate may all be included in the present invention. When some or all of the primary particles are aggregated, the relative ratio or position of the aggregate in which primary particles are aggregated and unaggregated primary particles is not limited.

In the present invention, the coating layer placed on the surface of the lithium transition metal oxide and including the metal oxide may have a thickness of 0.02 um to 2.4 um, specifically 0.1 um to 1.2 um, or 0.2 um to 0.5 um. When the thickness of the coating layer is within the above range, diffusion of a rock salt structure on the surface of the lithium transition metal oxide may be effectively suppressed, and also side reactions caused by increased surface area of the coating layer due to the small size of the primary particles may be minimized.

In the present invention, a volume ratio of the lithium transition metal oxide and the coating layer may be 50:50 to 95:5, specifically, 70:30 to 90:10. Within the above range, the above-described characteristics of a single particle may be maintained and also diffusion of a rock salt structure may be effectively prevented through the primary particle size gradient of the lithium transition metal oxide and the coating layer.

The coating layer may be formed across an entire surface of the lithium transition metal oxide or may be partially formed. In a case in which the coating layer is partially formed on the surface of the lithium transition metal oxide, the coating layer may be formed in an area of 20% or more to less than 100% of a total area of the lithium transition metal oxide. In a case in which the area of the coating layer is greater than 20%, an effect of improving lifespan characteristics and improving packing density according to the formation of the coating layer may be satisfactory.

### <Method of preparing positive electrode active material>

A method of preparing a positive electrode active material includes preparing a transition metal hydroxide comprising nickel in an amount of 60 mol% or greater with respect to a total number of moles of transition metals (S1, mixing the transition metal hydroxide with a lithium raw material and firing the mixture at a temperature of 800 to 890 °C to prepare a single particle lithium transition metal oxide (S2), heat treating the lithium transition metal oxide at a temperature higher than the firing temperature by 30 to 50 °C (S3), and mixing the heat treated lithium transition metal oxide with a coating raw material comprising at least one metal element selected from the group consisting of Ni, Co, Mn, Al, B, Ti, Ta, W, and Nb, and heat treating the mixture (S4) .

In the step (S1), a transition metal hydroxide including nickel in an amount of 60 mol% or greater with respect to a total number of moles of transition metals is prepared.

The transition metal hydroxide may be used through the purchase of a commercially available positive electrode active material precursor, or may be prepared according to a method of preparing a positive electrode active material precursor, which is well known in the art.

For example, the transition metal hydroxide may be prepared by adding an ammonium cation-containing complex formation agent and a basic compound to a transition metal solution containing a nickel-containing raw material, a cobalt-containing raw material, and a manganese-containing raw material, and subjecting the mixture to a co-precipitation reaction.

In the step (S2), the transition metal hydroxide is mixed with a lithium raw material and the mixture was fired at a temperature of 800 to 890 °C to prepare a single particle lithium transition metal oxide.

That is, firing is performed at a temperature of 800 to 890 °C to prepare a positive electrode active material in the form of a single particle. When the firing temperature is within the above range, a single particle having high crystallinity may be provided and single particle size may be effectively controlled. The firing temperature may be 800 to 890 °C, preferably 800 to 850 °C.

The lithium raw material may be lithium-containing carbonates (e.g., lithium carbonate, and the like), hydrates (e.g., lithium hydroxide I hydrate (LiOH·H₂O), and the like), hydroxides (e.g., lithium hydroxide, and the like), nitrates (e.g., lithium nitrate (LiNO₃), and the like), or chlorides (e.g., lithium chloride (LiCl), and the like), but is not limited thereto.

The firing may be performed in an oxygen or air atmosphere, and may be performed for 5 to 25 hours. When the firing is performed in the atmosphere described above, a local oxygen partial pressure increases so that crystallinity of the positive electrode active material is improved and control of the surface phase becomes easy.

In addition, during the preparation of the lithium transition metal oxide, selectively doping the lithium transition metal oxide with a doping element M¹ (where, M¹ is at least one selected from the group consisting of aluminum (Al), magnesium (Mg), vanadium (V), titanium (Ti), and zirconium (Zr)), if necessary, in order to improve structural stability of the lithium transition metal oxide may be further included. For example, in a case in which the lithium transition metal oxide is doped with the doping element M¹, the doping element M¹ may be doped by introducing a doping element M¹ raw material during a co-precipitation reaction for preparing a positive electrode active material precursor, or a M¹-doped lithium transition metal oxide may be prepared by introducing the doping element M¹ raw material during sintering of the positive electrode active material precursor and the lithium raw material.

In the step (S3), the lithium transition metal oxide is heat treated at a temperature higher than the firing temperature by 30 to 50 °C. Specifically, the temperature of the lithium transition metal oxide may be raised to a temperature higher than the firing temperature by 30 to 50 °C, or 30 to 40 °C, for example by 30 °C, and then the temperature may be lowered.

Through the heat treatment, lithium by-products such as LiOH or Li₂CO₃ are sufficiently generated on the surface of the lithium transition metal oxide. The lithium by-products react with the coating raw material on the surface of the lithium transition metal oxide to form a metal oxide in the form of primary particles having an average particle diameter (D₅₀) of 0.5 um or less, thereby forming a coating layer.

When the heat treatment process is skipped, the lithium by-products are not sufficiently present on the surface of a lithium transition metal compound. In this case, the formation of new primary particles induced by the reaction between the coating raw material and the lithium by-products is not sufficiently performed, and a uniform coating layer in which the coating raw material generally covers the lithium transition metal oxide is formed. This makes it hard to suppress diffusion of a rock salt structure, using small-diameter primary particles placed in the coating layer.

In the step (S4), the heat treated lithium transition metal oxide is mixed with a coating raw material including at least one metal element selected from the group consisting of Ni, Co, Mn, Al, B, Ti, Ta, W, and Nb, and the mixture is heat treated.

Through the heat treatment, a reaction between the lithium by-products and the coating raw material is induced on the surface of the lithium transition metal oxide, and accordingly, a metal oxide in a dot form, specifically, in the form of primary particles having an average particle diameter (D₅₀) of 0.5 um or less may be stably formed on the surface of the lithium transition metal oxide. Accordingly, the positive electrode active material of the present invention exhibits excellent particle strength due to high structural stability.

The coating raw material may be used without limitation as long as it includes at least one metal element selected from the group consisting of Ni, Co, Mn, Al, B, Ti, Ta, W, and Nb, and is suitable enough to form a metal oxide through a reaction with lithium by-products. For example, when Co is included as a metal element, the coating raw material may be Co₃O₄, Co(OH)₂, Co₂O₃, Co₃(PO₄)₂, CoF₃, CoOOH, Co(OCOCH₃)₂·4H₂O, Co (NO₃) ·6H₂O, Co₃O₄, Co(SO₄)₂·7H₂O, and CoC₂O₄, but is not limited thereto.

In the step (S4), the heat treatment may be performed at a temperature of 600 to 700 °C, and may be performed in an oxygen or air atmosphere. When the firing is performed in the atmosphere described above, a local oxygen partial pressure increases so that crystallinity of the positive electrode active material is improved and control of the surface phase becomes easy.

Furthermore, the preparation method of the present invention may further include washing the positive electrode active material synthesized through the method as described above.

For example, a lithium by-product present as an impurity on the surface of the positive electrode active material may be effectively removed by mixing the positive electrode active material with a washing solution (preferably, distilled water) and washing the positive electrode active material.

In addition, the preparation method of the present invention may further include forming a coating layer, after the washing. Preferably, the coating layer may include B, but the present invention is not limited thereto.

For example, after a surface treatment is performed on the positive electrode active material with a composition for forming a coating layer, which is prepared by dispersing the coating element in a solvent, using a conventional slurry coating method such as application, immersion, and spraying, the coating layer may be formed on the surface of the positive electrode active material by performing a heat treatment.

A mixture of at least one selected from the group consisting of water, alcohol having 1 to 8 carbon atoms, dimethyl sulfoxide (DMSO), N-methylpyrrolidone, acetone, and a combination thereof may be used as the solvent capable of dispersing the coating element to form the coating layer. In addition, the solvent may be included in an amount such that it may exhibit appropriate applicability and may be easily removed during the subsequent heat treatment.

Subsequently, the heat treatment for forming the coating layer may be performed in a temperature range in which the solvent contained in the composition may be removed, and may specifically be performed in a temperature range of 100°C to 500°C, for example, 200°C to 400°C. In a case in which the heat treatment temperature is less than 100°C, there is a concern that a side reaction may occur due to the residual solvent and, as a result, battery characteristics may degrade, and, in a case in which the heat treatment temperature is greater than 500°C, there is a concern that a side reaction due to high-temperature heat may occur.

### <Positive electrode>

In addition, the present invention provides a positive electrode for a lithium secondary battery including a positive electrode active material prepared through the above-described method.

Specifically, the positive electrode includes a positive electrode collector and a positive electrode active material layer placed on at least one surface of the positive electrode collector and including the positive electrode active material.

The positive electrode collector is not particularly limited as long as it has conductivity without causing a chemical change in a battery. For example, stainless steel, aluminum, nickel, titanium, baked carbon, or aluminum or stainless steel that is surface-treated with one of carbon, nickel, titanium, silver, and the like may be used. In addition, the positive electrode current collector may typically have a thickness of 3 to 500 µm, and fine irregularities may be formed on a surface of the current collector to improve the adhesion of a positive electrode active material. For example, the positive electrode collector may be used in various forms such as a film, a sheet, a foil, a net, a porous body, a foam body, and a non-woven fabric body.

The positive electrode active material layer may include a conductive material and a binder, together with a positive electrode active material.

In this case, the positive electrode active material may be included in an amount of 80 wt% to 99 wt%, more specifically 85 wt% to 98 wt% with respect to the total weight of the positive electrode active material layer. When included in the above amount range, the positive electrode active material may exhibit excellent capacity properties.

In this case, the conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 1 to 30 wt% with respect to the total weight of the positive electrode active material layer.

The binder serves to improve the bonding between positive electrode active material particles and the adhesion between the positive electrode active material and the collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 to 30 wt% with respect to the total weight of the positive electrode active material layer.

The positive electrode may be prepared according to a typical method of preparing a positive electrode except that the positive electrode active material described above is used. Specifically, a positive electrode material mixture, which is prepared by dissolving or dispersing the positive electrode active material and selectively, a binder and a conductive material in a solvent, is coated on the positive electrode collector, and the positive electrode may then be prepared by drying and roll-pressing the coated positive electrode collector. In this case, types and amounts of the positive electrode active material, the binder, and the conductive material are as described above.

The solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The amount of the solvent to be used is sufficient if the solvent may dissolve or disperse the positive electrode active material, the conductive material, and the binder in consideration of the applying thickness of a slurry and preparation yield, and thereafter, have a viscosity which may exhibit excellent thickness uniformity during application for the preparation of a positive electrode.

In addition, in another method, the positive electrode may be prepared by casting the positive electrode material mixture on a separate support and then laminating a film separated from the support on the positive electrode collector.

### <Lithium secondary battery>

In addition, the present invention may manufacture an electrochemical device including the positive electrode. The electrochemical device may be specifically a battery, a capacitor, or the like, and more specifically, may be a lithium secondary battery.

Specifically, the lithium secondary battery includes a positive electrode, a negative electrode positioned to face the positive electrode, a separator interposed between the positive electrode and the negative electrode, and an electrolyte. The positive electrode is the same as that described above, and thus, a detailed description thereof will be omitted. Hereinafter, only the rest of the components will be described in detail.

In addition, the lithium secondary battery may selectively further include a battery case for accommodating an electrode assembly composed of the positive electrode, the negative electrode, and the separator, and a sealing member for sealing the battery case.

In the lithium secondary battery, the negative electrode includes a negative electrode collector and a negative electrode active material layer positioned on the negative electrode collector.

The negative electrode collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. In addition, the negative electrode collector may typically have a thickness of 3 um to 500 µm, and as in the case of the positive electrode collector, fine irregularities may be formed on the surface of the negative electrode collector to improve the adhesion of a negative electrode active material. For example, the negative electrode collector may be used in various forms such as a film, a sheet, a foil, a net, a porous body, a foam body, and a non-woven fabric body.

The negative electrode active material layer selectively includes a binder and a conductive material in addition to a negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β}(0<β<2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metallic lithium thin film may be used as the negative electrode active material. Furthermore, low crystalline carbon, high crystalline carbon and the like may all be used as a carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% with respect to the total weight of a negative electrode active material layer.

The binder is a component for assisting in bonding between a conductive material, an active material, and a current collector, and is typically added in an amount of 0.1 parts by weight to 10 parts by weight based on a total weight of 100 parts by weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of a negative electrode active material, and may be added in an amount of 10 wt% or less, preferably 5 wt% or less, with respect to the total weight of a negative electrode active material layer. Such conductive agent is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like may be used.

For example, the negative electrode active material layer may be prepared by applying a negative electrode mixture material, which is prepared by dissolving or dispersing a negative electrode active material and selectively a binder and a conductive material in a solvent, on a negative electrode current collector and drying the coated negative electrode collector, or may be prepared by casting the negative electrode material mixture on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may be selectively used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, performance of the electrolyte may be excellent when the cyclic carbonate and the chain carbonate are mixed in a volume ratio of about 1:1 to about 1:9.

Any compound may be used as the lithium salt without particular limitation as long as it may provide lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be preferably used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. At this time, the additive may be included in an amount of 0.1 to 5 parts by weight based on a total weight of 100 parts by weight of the electrolyte.

The lithium secondary battery including the positive electrode active material according to the present invention as describe above stably exhibits excellent discharging capacity, output properties, and lifespan properties, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

The outer shape of the lithium secondary battery of the present invention is not particularly limited, and thus a cylindrical shape using a can, a prismatic shape, a pouch shape, or a coin shape, may be used.

The lithium secondary battery according to the present invention may be used in a battery cell which is used as a power source for a small-sized device, and may also be preferably used as a unit cell for a medium- and large-sized battery module including a plurality of battery cells.

### <Example>

Hereinafter, the present invention will be described in more detail with reference to Examples. However, the following Examples are for illustrative purposes only to describe the present invention and are not intended to limit the scope of the present invention.

### Example 1

Lithium source LiOH was added to a positive electrode active material precursor Ni_{0.85}Co_{0.05}Mn_{0.10}(OH)₂ and the two were mixed, and the mixed powder was put into an alumina crucible for heat treatment. Thereafter, the resulting product was fired at 825 °C for 20 hours in an oxygen atmosphere to prepare a lithium transition metal oxide.

The lithium transition metal oxide was then pulverized and heat treated in an oxygen atmosphere at 855 °C, and then mixed with Co₃O₄ and heat treated in an oxygen atmosphere at 650 °C to prepare a positive electrode active material.

### Comparative Example 1

A positive electrode active material was prepared in the same manner as in Example 1, except that the heat treatment in an oxygen atmosphere at 855 °C and the heat treatment in an oxygen atmosphere at 650 °C by mixing with Co₃O₄ were not performed.

### Comparative Example 2

A positive electrode active material was prepared in the same manner as in Example 1, except that the heat treatment in an oxygen atmosphere at 855 °C was not performed.

### Experimental Example 1: Observation of positive electrode active material surface

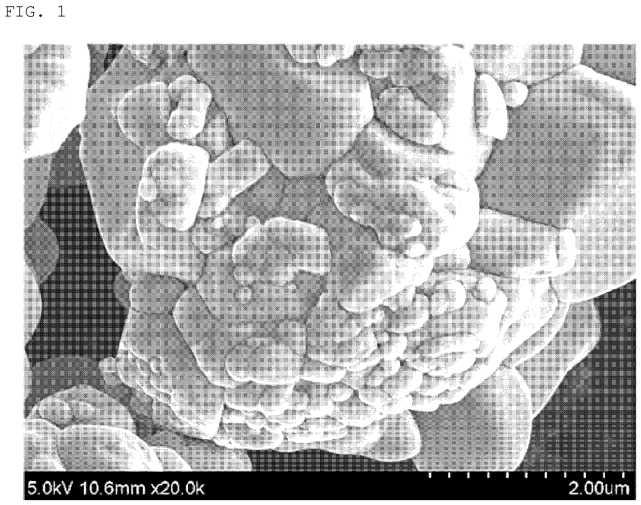

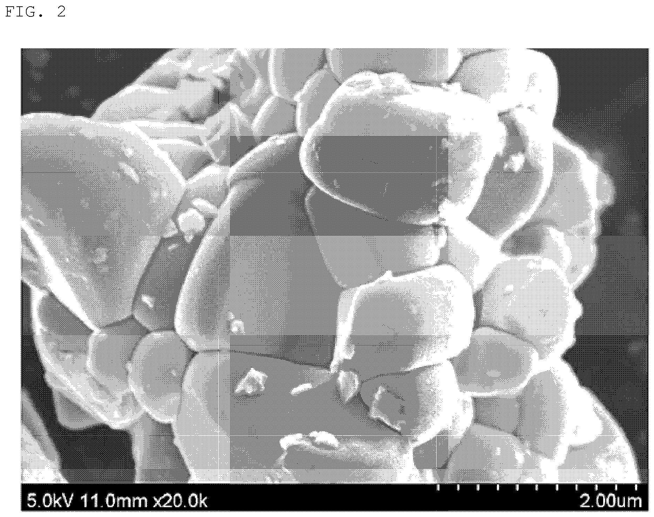

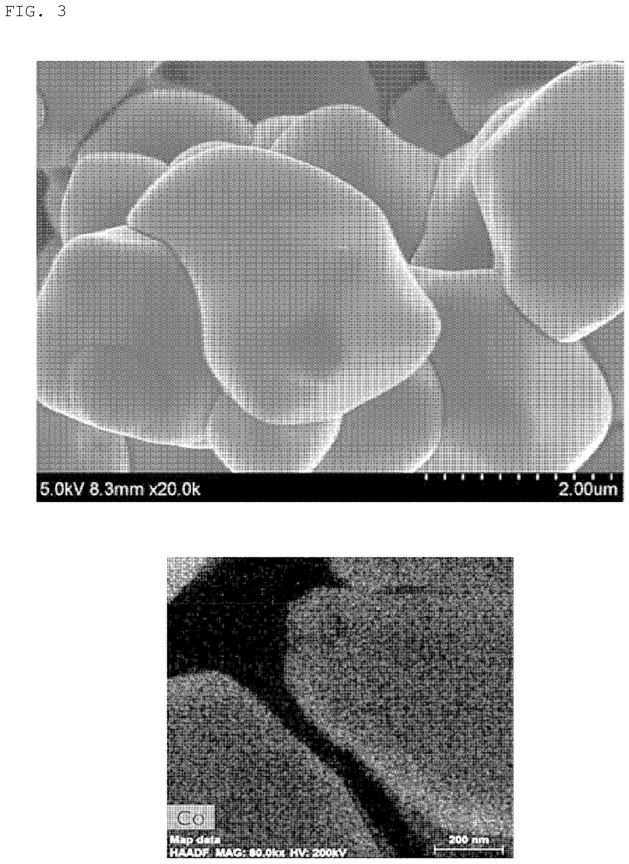

Surfaces of the positive electrode active materials of Example 1 and Comparative Examples 1 and 2 were observed, and the results are shown in FIGS. 1 to 3.

As shown in FIGS. 1 to 3, in Example 1, a coating layer in the form of a single particle inside where the lithium transition metal oxide is placed, and having primary particle with a decreasing size toward the surface was formed.

Meanwhile, in Comparative Example 1, a coating layer formed of primary particles was not formed on the surface of the lithium transition metal oxide, but only a small number of primary particles that were not formed as a single particle remained.

In addition, in the case of Comparative Example 2, a coating layer formation step of heat treatment by mixing with Co₃O₄ was performed, and unlike Example 1, it is confirmed that there was no gradient in the primary particle size and only a uniform and smooth coating layer was placed on the surface. This is because, in Comparative Example 2, the step of generating lithium by-products on the surface of lithium transition metal oxide through heat treatment was skipped.

### Experimental Example 2: Average particle diameter of positive electrode active material

For the positive electrode active material particles prepared in Example 1 and Comparative Examples 1 and 2, average particle diameter of primary particles forming lithium transition metal oxide (single particle), and average particle diameter of primary particles that are metal oxides included in a coating layer were measured. SEM images were used to measure the average particle diameters.

**[Table 1]**

| | Example 1 | Comparative Example 1 | Comparative Example 2 |
|---|---|---|---|
| Primary particle average particle diameter in lithium transition metal oxide, D₅₀ (µm) | 2.0 | 2.0 | 2.0 |
| Primary particle average particle diameter of metal oxide, D₅₀ (µm) | 0.2 | - | - |

As shown in Table 1, it is confirmed that the positive electrode active material of Example 1 according to the present invention includes single-particle lithium transition metal oxide formed of primary particles having an average particle diameter of 2.0 um, and metal oxide of primary particles placed on a surface thereof and having an average particle diameter of 0.2 um. As such, it is seen that the size of the primary particles forming a core of the positive electrode active material of the present invention and the size of the primary particles placed on the surface are different.

Meanwhile, the positive electrode active materials of Comparative Examples 1 and 2 did not contain metal oxide of primary particles, thereby failing to measure corresponding average particle diameters.

### Experimental Example 3: Evaluation of resistance characteristics

Lithium secondary batteries were prepared using the positive electrode active materials of Example 1 and Comparative Examples 1 and 2, and resistance characteristics were evaluated for each.

To be specific, each of the positive electrode active materials prepared in Examples and Comparative Examples, a carbon black conductive material, and a polyvinylidene fluoride (PVdF) binder were mixed in an N-methylpyrrolidone (NMP) solvent in a weight ratio of 96.5:1.5:2 to prepare a positive electrode slurry. The positive electrode slurry was applied on one surface of an aluminum current collector, dried at 100 °C, and then roll-pressed to prepare a positive electrode.

Meanwhile, lithium metal was used as a negative electrode.

A polyethylene separator was interposed between the positive electrode and the negative electrode prepared above to manufacture an electrode assembly, and the electrode assembly was placed inside a battery case. Thereafter, an electrolyte solution was injected into the inside of the case to manufacture a lithium secondary battery. In this case, an electrolyte in which 1.0 M of lithium hexafluorophosphate (LiPF₆) is dissolved in an organic solvent where ethylene carbonate, ethylmethyl carbonate, and diethyl carbonate (EC: EMC: DEC) are mixed in a volume ratio of 3: 4: 3 as an electrolyte was injected to prepare a lithium secondary battery.

Thereafter, the lithium secondary batteries were charged at a constant current of 0.4 C to a state of charge (SOC) of 5, 50, or 95 at a low temperature (-10°C), and then discharged at a constant current of 0.4 C for 1,350 seconds to measure a voltage drop for 1,350 seconds, and resistance at a low temperature was measured by dividing the voltage drop by a current value and presented in the following table.

**[Table 2]**

| | Example 1 | Comparative Example 1 | Comparative Example 2 |
|---|---|---|---|
| Resistance @SOC 5 (Ω) | 46.3 | 95.3 | 79.8 |
| Resistance @SOC 50 (Ω) | 10.9 | 16.1 | 14.7 |
| Resistance @SOC 95 (Ω) | 11.5 | 18.3 | 16.2 |

As shown in Table 2, it is confirmed that low-temperature resistances of the secondary batteries of Examples were improved in comparison to those of the secondary batteries of Comparative Examples.

Experimental Example 4: Evaluation of capacity and resistance characteristics according to charging/discharging cycles

Each of the lithium secondary batteries prepared above was charged at a constant current of 0.2 C up to 4.25 V with cut off at 0.05 C at room temperature. Then, the lithium secondary batteries were discharged up to 2.5 V at a constant current of 0.2 C. The charging and discharging behavior was set as one cycle, and from the second time, charging at a constant current of 0.5 C up to 4.25 V with cut off at 0.05 C and discharging at a constant current of 0.5 C up to 2.5 V was set as one cycle.

This cycle was repeated 30 times, and then capacity retention and resistance increase rate according to the cycle of the secondary batteries were measured, which are shown in Table 3 below.

**[Table 3]**

| | Example 1 | Comparative Example 1 | Comparative Example 2 |
|---|---|---|---|
| Capacity retention @30cycles(%) | 92.4 | 78.4 | 85.9 |
| Resistance increase rate @30cycles(%) | 31.0 | 87.5 | 79.1 |

As shown in Table 3, it is confirmed that the secondary batteries of Examples had improved capacity retention and reduced resistance change rate when compared to the secondary batteries of Comparative Examples.

## Claims

1. A positive electrode active material comprising:
a lithium transition metal oxide comprising nickel in an amount of 60 mol% or greater with respect to a total number of moles of transition metals excluding lithium; and
a coating layer placed on a surface of the lithium transition metal oxide, and comprising a metal oxide,
wherein the lithium transition metal oxide is a single particle comprising primary particles having an average particle diameter (D₅₀) of 0.7 to 3 um, and
the metal oxide is primary particles having an average particle diameter (D₅₀) of 0.5 um or less and comprises at least one metal element selected from the group consisting of Ni, Co, Mn, Al, B, Ti, Ta, W, and Nb.

2. The positive electrode active material of claim 1, wherein the coating layer has a thickness of 0.02 to 2.4 um.

3. The positive electrode active material of claim 1, wherein a volume ratio of the lithium transition metal oxide and the coating layer is 50:50 to 95:5.

4. The positive electrode active material of claim 1, wherein the lithium transition metal oxide is a single particle having an average particle diameter (D₅₀) of 1 to 10 µm.

5. The positive electrode active material of claim 1, wherein the one single particle is formed of 2 to 30 primary particles.

6. The positive electrode active material of claim 1, wherein the lithium transition metal oxide is represented by Formula 1 below:
[Formula 1] Li₁₊ₐNiₓCO_{y}Mn_{z}M¹_{w}O₂
wherein in Formula 1 above,
M¹ is at least any one selected from the group consisting of Al, Mg, V, Ti, and Zr, and
0≤a≤0.5, 0.6≤x<1, 0<y≤0.4, 0<z≤0.4, 0<w≤0.04, and x+y+z+w=1 are satisfied.

7. A method of preparing a positive electrode active material, the method comprising:
preparing a transition metal hydroxide comprising nickel in an amount of 60 mol% or greater with respect to a total number of moles of transition metals (S1);
mixing the transition metal hydroxide with a lithium raw material and firing the mixture at a temperature of 800 to 890 °C to prepare a single particle lithium transition metal oxide (S2);
heat treating the lithium transition metal oxide at a temperature higher than the firing temperature by 30 to 50 °C (S3); and
mixing the heat treated lithium transition metal oxide with a coating raw material comprising at least one metal element selected from the group consisting of Ni, Co, Mn, Al, B, Ti, Ta, W, and Nb, and heat treating the mixture (S4).

8. The method of claim 7, wherein in the step (S4), the heat treatment is performed at a temperature of 600 to 700 °C.

9. The method of claim 7, wherein the firing is performed in an oxygen or air atmosphere.

10. A positive electrode for a lithium secondary battery comprising the positive electrode active material of any one of claims 1 to 6.

11. A lithium secondary battery comprising the positive electrode for a lithium secondary battery of claim 10.
